# EUROPÄISCHE PATENTANMELDUNG

(11) **EP 4 321 337 A1**
(43) Veröffentlichungstag der Anmeldung: **14.02.2024**
(21) Anmeldenummer: 22189764.8
(22) Anmeldetag: 10.08.2022
(51) Int. Cl.: B32B 27/08, B32B 27/32, B32B 27/18, B32B 27/20

(54) **DECKFOLIE UND BODENFOLIE FÜR EINE BLISTERVERPACKUNG SOWIE BLISTERVERPACKUNG**

(71) Anmelder: SÜDPACK Medica AG, 6340 Baar (CH)
(72) Erfinder: Grimbacher, Carolin, 88416 Ochsenhausen (DE); Hermann, Michael, 5400 Baden (CH)
(74) Vertreter: Christ, Niko

(57) **Zusammenfassung**

Die Erfindung betrifft eine Deckelfolie und eine Bodenfolie für eine Blisterpackung, umfassend zwei Außenschichten, nämlich eine Deckschicht und eine Siegelschicht, sowie eine oder mehrere zwischen der Deckschicht und der Siegelschicht angeordnete Zwischenschichten. Ferner betrifft die Erfindung eine Blisterverpackung.

Aufgabe der Erfindung ist es, auf Aluminium zu verzichten und gleichzeitig kostengünstig die Anforderungen für hochwertige Medikamente an eine hohe Wasser- und Sauerstoffbarriere zu erfüllen.

Dies gelingt der hier beschriebenen Erfindung dadurch, dass die Deckschicht und die Siegelschicht Polypropylen-Schichten sind.

## Beschreibung

Die Erfindung betrifft eine Deckelfolie und eine Bodenfolie für eine Blisterpackung, umfassend zwei Außenschichten, nämlich eine Deckschicht und eine Siegelschicht, sowie eine oder mehrere zwischen der Deckschicht und der Siegelschicht angeordnete Zwischenschichten. Ferner betrifft die Erfindung eine Blisterverpackung.

Insbesondere bei hochwertigen Medikamenten kommen Verpackungen zum Einsatz, die das Medikament vor Umwelteinflüssen, insbesondere vor Sauerstoff und Feuchtigkeit, sicher schützen sollen. Nur so behalten der Wirkstoff bzw. die Inhaltsstoffe des Medikaments ihre Wirkung, die sie bei Einnahme entfalten sollen. Daher kommen für tablettenförmige Medikamente häufig sogenannte Blisterverpackungen zum Einsatz. Diese bestehen zumeist aus einem sogenannten Durchdrückblister, auch Bodenteil bzw. Bodenfolie genannt, der ein geformtes Teil mit Mulden bzw. Kavitäten darstellt, der meist aus Kunststoff besteht aber auch aus Aluminium hergestellt sein kann, und einer Deckfolie, auch Blisterfolie genannt, die meist durchdrückbar ist und auch überwiegend aus Aluminium besteht, sodass ein Medikament aus der Kavität der Bodenfolie durch die Deckelfolie hindurch von einer Person herausgedrückt werden kann. Der grundsätzliche Vorteil der Blisterverpackungen ist dabei die einfache Handhabung, die kompakten Abmaße der Verpackung und die damit einhergehende leichte Tragbarkeit des jeweiligen Medikaments unter gleichzeitigem Schutz vor etwaigen Umwelteinflüssen.

Der Einsatz von Aluminium dient dabei primär der Abschottung des Medikaments gegenüber Wasser und Sauerstoff, da Aluminium eine hohe Wasserdampf- und Sauerstoffbarriere aufweist und dabei gleichzeitig, je nach Folienstärke bzw. -dicke, relativ leicht vom Anwender mit dem jeweiligen Medikament in der Kavität der Bodenfolie aus der Blisterverpackung heraus durch die Deckfolie hindurchdrückbar ist. Allerdings ist Aluminium als Material energie- und ressourcenintensiv und trotz der Tatsache, dass Aluminium recyclebar ist, dennoch mit einem hohen Energiebedarf verbunden.

Daher sind aus dem Stand der Technik unterschiedliche Ansätze bekannt, Aluminium in der Blisterverpackung zu reduzieren bzw. vollständig zu entfernen und dabei die gleichen Materialeigenschaften, die Aluminium bietet, bereitzustellen.

Beispielsweise ist aus der DE 10 2008 056 123 A1 eine Blisterverpackung vorbekannt, die eine Mehrschichtfolie umfasst, die ausschließlich aus unterschiedlichen Kunststoff- bzw. Polymerschichten besteht und somit im Ergebnis auf Aluminium vollständig verzichten kann. Dabei handelt es sich im speziellen um eine tiefziehbare Mehrschichtfolie mit geringer Wasserdampf- und Sauerstoffdurchlässigkeit, die sich für Blisterverpackungen für Medikamente eignet und bevorzugt einen Schichtverbund der Art PVC/PVDC/PCTFE/PVC aufweist.

Ferner offenbart die US 2009/0208729 A1 eine Folienstruktur, die sich dadurch auszeichnet, dass diese mindestens fünf Schichten umfasst. Davon sind zwei Außenschichten, die aus einem Polyolefin bestehen, auf denen jeweils auf den gegenüberliegenden Seiten eine Gasbarriere bildende Schicht vorgesehen ist, wobei zwischen den beiden vorgenannten Gasbarrieren eine Schicht aus einem geschäumten Kunststoff vorgesehen ist. Beide Außenschichten bestehen dabei aus einem Gemisch aus einem Polyolefin und einem Bindemittel, das es ermöglicht, dass diese Polyolefin-Schicht mit der die Gasbarriere bildenden Schicht verbunden ist.

Ausgehend von diesem Stand der Technik ist es Aufgabe der hier beschriebenen Erfindung, eine Blisterverpackung, eine Deckelfolie und eine Bodenfolie bereitzustellen, bei denen jeweils auf Aluminium verzichtet werden kann und mit denen kostengünstig die Anforderungen für hochwertige Medikamente an eine hohe Wasser- und Sauerstoffbarriere erfüllt sind.

Diese Aufgabe wird mit einer Deckelfolie gemäß dem geltenden Anspruch 1 und einer Bodenfolie gemäß Anspruch 17 gelöst. Ferner wird diese Aufgabe durch eine Blisterverpackung gemäß dem nebengeordneten Anspruch 29 gelöst. Vorteilhafte Ausführungsformen können den abhängigen Ansprüchen entnommen werden.

In einem ersten Aspekt der Erfindung handelt es sich um eine Deckelfolie zum Versiegeln einer Bodenfolie einer Blisterverpackung für Medikamente, umfassend zwei Außenschichten, nämlich einer Deckschicht und einer Siegelschicht. Die Deckelfolie stellt selbst somit eine Mehrschichtfolie dar, bei der die Deckschicht die Seite der Deckelfolie ist, die der Außenwelt bzw. der Umwelt zugewandt ist. Die Siegelschicht ist dabei die Seite der Deckelfolie, die dem Medikament innerhalb einer üblicherweise vorhandenen Kavität der Bodenfolie zugewandt ist. Zwischen diesen Außenschichten, also der Deckschicht und der Siegelschicht, befinden sich eine oder mehrere Zwischenschichten.

Die Erfindung zeichnet sich dadurch aus, dass die Deckschicht und die Siegelschicht aus Polypropylen bestehen, also Polypropylen-Schichten sind. Polypropylen ist vergleichbar günstig wie das häufig eingesetzte Polyvinylchlorid in Blisterverpackungen bzw. Deckel- und Bodenteilen von Blisterverpackungen, jedoch mit einer grundsätzlich höheren Wasserdampfbarriere.

Um die Brüchigkeit und den zum Durchdrücken des jeweiligen Medikaments aus einem Bodenteil durch die Deckelfolie hindurch verbundenen Kraftaufwand zu verringern, sieht die Erfindung für die Deckelfolie in einer vorteilhaften Ausgestaltung vor, dass die eine oder mehreren Zwischenschichten zwischen den beiden Außenschichten Copolymer-Schichten, vorzugsweise heterophasische Copolymer-Schichten, sind. Besonders bevorzugt handelt es sich dabei um eine heterophasische Polypropylen-Copolymer-Schicht. Heterophasische Copolymer-Schichten, auch Block-Copolymere genannt, umfassen eine Polymermatrix mit einer dispergierten gummiartigen Copolymerphase. Die Matrix ist ein Homopolymer oder eine statistische Copolymermatrix. Die gummiartige Copolymerphase ist eine Mischung aus einem amorphen Kautschuk, einem kautschukartigen Polymer, das normalerweise bei heterophasischen Polypropylen-Copolymeren ein Ethylen/Propylen-Copolymer (Kautschuk) ist und einem halbkristallinen Copolymer.

Bevorzugt weist die wenigstens eine Copolymer-Schicht der einen oder mehreren Zwischenschichten eine Schichtdicke von 20 bis 260 µm auf, besonders bevorzugt eine Schichtdicke von 100 bis 180 µm. Mit einer solchen Schichtdicke bleibt die Deckelfolie immer noch kompakt, unter gleichzeitiger Verbesserung der mechanischen Eigenschaften, nämlich der Durchdrückbarkeit mittels eines tablettenförmigen Medikaments durch einen Anwender.

Alternativ oder ergänzend sieht die Erfindung in einer weiteren vorteilhaften Ausgestaltung ferner für die Deckelfolie vor, dass die eine oder mehreren Zwischenschichten wenigstens eine talkum-verstärkte Polypropylen-Schicht umfassen. Ein talkum-verstärktes Polypropylen ist dabei beispielsweise eine Zusammensetzung aus Polypropylen und Talkum, wobei der Anteil des Talkums meist in einem Bereich von 20 bis 35 % variiert. Das talkum-verstärkte Polypropylen zeichnet sich durch eine höhere Hitzebeständigkeit und Tragfähigkeit sowie einer verbesserten Steifigkeit gegenüber reinem Polypropylen aus. Allerdings führt letztere Eigenschaft dazu, dass der Kunststoff auch bruchanfälliger ist. Genau diese Eigenschaft ist aber an dieser Stelle gewünscht, um je nach Schichtdicke der talkum-verstärkten Polypropylen-Schicht, eine leichtere Durchdrückbarkeit der Deckelfolie zu erreichen.

Ferner sieht die Erfindung in einer weiteren vorteilhaften Ausgestaltung für die Deckelfolie vor, dass die eine oder mehreren Zwischenschichten wenigstens eine Cyclo-Olefin-Schicht, vorzugsweise eine Cyclo-Olefin-Copolymer-Schicht, umfasst. Das Vorhandensein einer Cyclo-Olefin-Schicht führt zu einer deutlichen Verbesserung der Wasserdampfbarriere, wobei die Höhe der Wasserdampfbarriere schlicht durch die Schichtdicke der Cyclo-Olefin-Schicht variiert werden kann, wobei diese in einem Bereich von 20 bis 260 µm, bevorzugt in einem Bereich von 80 bis 100 µm liegen kann und besonders bevorzugt 80 µm aufweist. Letztere Schichtdicke ist dabei der optimale Kompromiss zwischen einer verbesserten Wasserdampfbarriere und der ferner gewünschten Durchdrückbarkeit der Deckelfolie.

Um aber auch den Anforderungen einiger Medikamente an eine hohe Sauerstoffbarriere gerecht werden zu können, sieht die Erfindung in einer weiteren vorteilhaften Ausgestaltung für die Deckelfolie vor, dass die eine oder mehreren Zwischenschichten wenigstens eine Polyvinylalkohol-Schicht, bevorzugt eine Ethylen-Vinylalkohol-Copolymer-Schicht, umfasst. Aufgrund der innerhalb eines Polyvinylalkohols vorhandenen Wasserstoffbrückenbindungen zwischen den einzelnen Polymerketten und in Verbindung mit der kristallinen Struktur ist Polyvinylalkohol eine der besten verfügbaren Barrieren gegen Sauerstoff. Bevorzugt weist die Polyvinylalkohol-Schicht dabei eine Schichtdicke von 5 bis 15 µm auf.

Je nach gewünschten Eigenschaften der Deckelfolie sieht die Erfindung in einer weiteren vorteilhaften Ausgestaltung unterschiedliche Materialien für die Außenschichten, also die Deckschicht und Siegelschicht, vor.

In einer ersten alternativen Ausgestaltung bestehen die Deckschicht und/oder die Siegelschicht aus einer Polypropylen-Homopolymer-Schicht. Ein Polypropylen-Homopolymer zeichnet sich gegenüber ataktischem Polypropylen durch einen zunehmenden Kristallinitätsgrad, Schmelzpunkt, Zugfestigkeit, Steifigkeit und Härte aufgrund der isotaktischen Ausrichtung der Reste, hier der Methylengruppen, aus. Eine hohe Isotaktizität führt letztlich zu einer erhöhten Sprödigkeit, die wiederum vorteilhaft für die Verbesserung der Durchdrückbarkeit der Deckelfolie ist. Bevorzugt weist die Polypropylen-Homopolymer-Schicht dabei eine Schichtdicke von 10 bis 140 µm auf, besonders bevorzugt von 60 bis 110 µm.

In einer weiteren alternativen Ausgestaltung bestehen die Deckschicht und/oder die Siegelschicht aus einer Polypropylen-Copolymer-Schicht. Dabei kann zwischen einem Polypropylen-Block-Copolymer und einem Polypropylen-Random-Copolymer unterschieden werden. Beim Polypropylen-Block-Copolymer wird das Copolymer-Monomer blockweise in die Polymerkette eingebaut, wohingegen beim Polypropylen-Random-Copolymer dieses zufällig verteilt Einzug in die Molekülkette findet. Insbesondere durch die unterschiedliche Länge und Anzahl der Copolymer-Blöcke bzw. des jeweiligen verwendete Block-Copolymer-Monomers, können die Eigenschaften des jeweils zu erhaltenden Polypropylen-Copolymers beeinflusst werden. Insbesondere kann deren Zähigkeitsverhalten und Steifigkeit beeinflusst werden. Letztlich kann durch die Verwendung einer Polypropylen-Copolymer-Schicht wiederum Einfluss auf die Durchbrüchigkeit bzw. Zähigkeit der Deckelfolie genommen werden.

In einer weiteren alternativen Ausgestaltung bestehen die Deckschicht und/oder die Siegelschicht aus einer nukleierten Polypropylen-Homopolymer-Schicht. Eine Nukleierung bzw. Keimbildung kann genutzt werden, um bei ataktischem Polypropylen die Bildung von kristallinen Bereichen zu begünstigen. Denn die mechanischen Eigenschaften eines Polypropylens können von der Größe und Art der vorhandenen Kristallstrukturen beeinflusst werden. Da nicht alle Bereiche einer Polypropylen-Kette isotaktische oder syndiotaktisch sind, können nicht alle Bereiche einer Polymerkette in einen Kristallit eingebaut werden. Üblicherweise kristallisieren die isotaktischen Bereiche eines Polypropylen-Homopolymers in Form von α-Sphäroliten. Allerdings kann durch Zugabe von geeigneten bzw. speziellen Nukleierungsmitteln erreicht werden, dass sich β-Sphäroliten bilden, mit welchen eine erhöhte Schlagzähigkeit des hieraus erhaltenen Polypropylens einhergeht. Je nach gewünschten Eigenschaften und Anwendungsgebiet kann es somit vorteilhaft sein, nukleiertes Polypropylen-Homopolymer mit α-Sphäroliten oder mit β-Sphäroliten für die Deckschicht und/oder die Siegelschicht einer Deckelfolie zu verwenden. Besonders bevorzugt weist die nukleierte Polypropylen-Homopolymer-Schicht dabei eine Schichtdicke von 120 bis 200 µm auf.

Zur weiteren Verbesserung der Wasserdampf- und Sauerstoffbarriere sieht die Erfindung in einer weiteren vorteilhaften Ausgestaltung für die Siegelschicht vor, dass auf diese ein Siegellack aufgetragen ist. Dieser Lack dient zur weiteren Verstärkung der Wasserdampf- bzw. Sauerstoffbarriere, ohne dabei die gewünschten Eigenschaften an die Deckelfolie, insbesondere die Brüchigkeit für die Durchdrückbarkeit etwaiger Medikamente durch die Deckelfolie hindurch, zu sehr negativ zu beeinflussen.

Zur Kindersicherung etwaiger Blisterverpackungen für Medikamente ist es im Stand der Technik verbreitet, die Schichtdicke der Aluminiumfolie zu erhöhen bzw. die Blisterverpackung derart auszugestalten, dass die Deckelfolie nicht durchdrückbar, sondern lediglich mit einem für ein Kleinkind nicht aufbringbaren Kraftaufwand abziehbar ist. Um ebenfalls eine Kindersicherung der hier beschriebenen Blisterverpackung bereitstellen zu können, sieht die Erfindung in einer weiteren vorteilhaften Ausgestaltung vor, dass diese eine Barriere-Beschichtung auf der Deckschicht der Deckelfolie aufweist, vorzugsweise eine abziehbare Barriere-Beschichtung. Besonders bevorzugt handelt es sich bei der Beschichtung um eine biaxial-orientierte Polypropylen-Schicht. Biaxialorientiertes Polypropylen erhält seine besonderen Eigenschaften durch ein spezielles Reckverfahren, bei dem es zunächst in Walzenrichtung und dann orthogonal zur Walzenrichtung gereckt und anschließend fixiert wird, wobei es sich vor allem durch seine hohe Zugfestigkeit, chemische, mechanische und thermisehe Stabilität sowie Transparenz auszeichnet. Daher eignet es sich optimal zur Sicherung etwaiger Blisterverpackungen für Medikamente gegenüber ungewünschten Öffnungen durch Kinder, da aufgetragen auf eine Deckelfolie diese nicht mehr ohne einem entsprechenden Kraftaufwand vom Bodenteil der Blisterverpackung abgezogen werden kann.

In einem zweiten Aspekt der Erfindung betrifft diese eine Bodenfolie für eine Blisterverpackung für Medikamente, umfassend ebenfalls zwei Außenschichten, nämlich eine Deckschicht und eine Siegelschicht, und eine oder mehrere zwischen der Deckschicht und der Siegelschicht angeordnete Zwischenschichten.

Die hier erfindungsgemäße Bodenfolie zeichnet sich ebenfalls dadurch aus, dass die beiden Außenschichten, also die Deckschicht und die Siegelschicht, jeweils aus einer Polypropylen-Schicht bestehen. Hiermit kann ebenfalls die der Erfindung zu Grunde liegende Aufgabe gelöst werden, nämlich dass mittels eines kostengünstigen Materials eine Bodenfolie für eine Blisterverpackung bereitgestellt wird, die gleichzeitig eine relativ hohe Wasserdampf- und Sauerstoffbarriere aufweist.

Die Anforderungen an eine Bodenfolie sind dabei ähnlich wie die an die Deckelfolie. Allerdings ist bei einer Bodenfolie grundsätzlich eine Brüchigkeit nicht gewünscht, sondern vielmehr eine gewisse Verformbarkeit und einfache Verarbeitungsmöglichkeit, insbesondere bei der Bildung etwaiger Kavitäten bzw. Mulden innerhalb der Bodenfolie zur Aufnahme eines Medikaments, insbesondere in Tablettenform.

Daher sieht die Erfindung in einer ersten vorteilhaften Ausgestaltung vor, dass die eine oder mehrere Zwischenschichten wenigstens eine heterophasische Copolymer-Schicht, vorzugsweise eine heterophasische Polypropylen-Copolymer-Schicht, umfasst. Je nach Art der Copolymer-Zusammensetzung kann die Zähigkeit der Bodenfolie bzw. deren Elastizität gesteuert werden. Besonders bevorzugt weist die Schicht dabei eine Schichtdicke von 20 bis 260 µm, bevorzugt von 100 bis 180 µm, auf.

Ferner sieht die Erfindung in einer weiteren vorteilhaften Ausgestaltung für die Bodenfolie vor, dass die eine oder mehreren Zwischenschichten wenigstens eine Cyclo-Olefin-Copolymer-Schicht umfasst. Die Einführung einer Cyclo-Olefin-Copolymer-Schicht zwischen den beiden Außenschichten führt zu einer deutlichen Verbesserung der Wasserdampfbarriere, wobei die Höhe der Wasserdampfbarriere schlicht durch die Schichtdicke der Cyclo-Olefin-Copolymer-Schicht variiert werden kann, wobei diese in einem Bereich von 20 bis 260 µm, bevorzugt in einem Bereich von 80 bis 100 µm liegen kann und besonders bevorzugt 80 µm aufweist. Letztere Schichtdicke ist dabei der optimale Kompromiss zwischen einer verbesserten Wasserdampfbarriere und der ferner noch einfachen Verformbarkeit der Bodenfolie, um das in der Kavität bzw. Mulde vorhandene tablettenförmige Medikament aus der Bodenfolie durch einen Deckelteil hindurch herausdrücken zu können.

Um aber auch den Anforderungen einiger Medikamente an eine hohe Sauerstoffbarriere gerecht werden zu können, sieht die Erfindung in einer weiteren vorteilhaften Ausgestaltung für die Bodenfolie ebenfalls vor, dass die eine oder mehreren Zwischenschichten wenigstens eine Polyvinylalkohol-Schicht, bevorzugt eine Ethylen-Vinylalkohol-Copolymer-Schicht, umfasst. Aufgrund der innerhalb eines Polyvinylalkohols vorhandenen Wasserstoffbrückenbindungen zwischen den einzelnen Polymerketten und in Verbindung mit der kristallinen Struktur ist Polyvinylalkohol eine der besten verfügbaren Barrieren gegen Sauerstoff. Bevorzugt weist die Polyvinylalkohol-Schicht dabei eine Schichtdicke von 5 bis 15 µm auf.

Wie bereits weiter oben für die Deckelfolie beschrieben, können, je nach gewünschten Eigenschaften, auch die Außenschichten der Bodenfolie, also die Deckschicht und Siegelschicht, unterschiedliche Polypropylen-Materialien mit variierenden Schichtdicken aufweisen. Für die einzelnen alternativen und vorteilhaften Ausführungsformen wird nach oben verwiesen.

In einem dritten und letzten Aspekt betrifft die Erfindung eine Blisterverpackung für Medikamente, welche eine erfindungsgemäße Deckelfolie und/oder eine erfindungsgemäße Bodenfolie umfasst.

Die Erfindung wird nachfolgend anhand einiger Ausführungsbeispiele näher erläutert.

Es zeigt:
- Fig. 1:: eine skizzenhafte Darstellung einer erfindungsgemäßen mehrschichtigen Folie,
- Fig. 2:: ein erstes Ausführungsbeispiel der erfindungsgemäßen mehrschichtigen Deckelfolie,
- Fig. 3:: ein zweites Ausführungsbeispiel der erfindungsgemäßen mehrschichtigen Deckelfolie,
- Fig. 4:: ein drittes Ausführungsbeispiel der erfindungsgemäßen mehrschichtigen Deckelfolie, sowie
- Fig. 5:: ein viertes Ausführungsbeispiel der erfindungsgemäßen mehrschichtigen Deckelfolie.

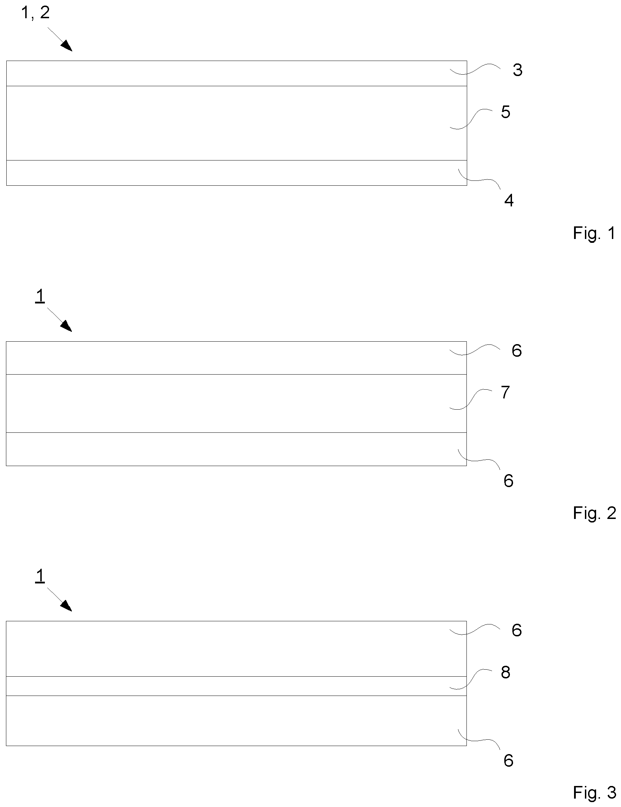

Figur 1 zeigt eine skizzenhafte Darstellung einer erfindungsgemäßen mehrschichtigen Folie. Sowohl die Deckelfolie 1 als auch die Bodenfolie 2 bestehen jeweils aus zwei Außenschichten, nämlich einer Deckschicht 3 und einer Siegelschicht 4. Die Deckschicht 3 ist die Seite der Deckelfolie 1, die der Außenwelt bzw. der Umwelt zugewandt ist. Die Siegelschicht 4 hingegen ist die Seite der Deckelfolie 1, die dem Medikament innerhalb einer üblicherweise vorhandenen Kavität der Bodenfolie 2 zugewandt ist. Zwischen diesen Außenschichten, also der Deckschicht 3 und der Siegelschicht 4, befinden sich eine oder mehrere Zwischenschichten 5.

Figur 2 zeigt dabei ein erstes Ausführungsbeispiel der erfindungsgemäßen Deckelfolie 1. Diese umfasst hierbei zwei Außenschichten und eine Zwischenschicht 5, wobei die Deckschicht 3 und die Siegelschicht 4 hierbei Polypropylen-Homopolymer-Schichten 6 sind und die Zwischenschicht 5 eine Copolymer-Schicht 7, insbesondere eine heterophasische Random-Copolymer-Schicht, ist. Diese eignet sich für weniger wasser- und sauerstoffempfindliche Medikamente und weist eine einfache Durchdrückbarkeit aufgrund der im Vergleich zu den Außenschichten deutlich größeren Zwischenschicht 5 auf, da die Zwischenschicht 5 aus heterophasischem Random-Copolymer 7 gegenüber den Polypropylen-Homopolymer-Schichten 6 eine höhere Brüchigkeit bzw. Steifigkeit und damit eine geringere Elastizität aufweist.

Eine erfindungsgemäße Deckelfolie 1 die sich auch für wasserempfindliche Medikamente eignet, ist in der Figur 3 gezeigt. Diese weist zwischen den beiden Polypropylen-Homopolymer-Schichten 6 als Deckschicht 3 und Siegelschicht 4 eine Cyclo-Olefin-Schicht 8 als Zwischenschicht 5 auf.

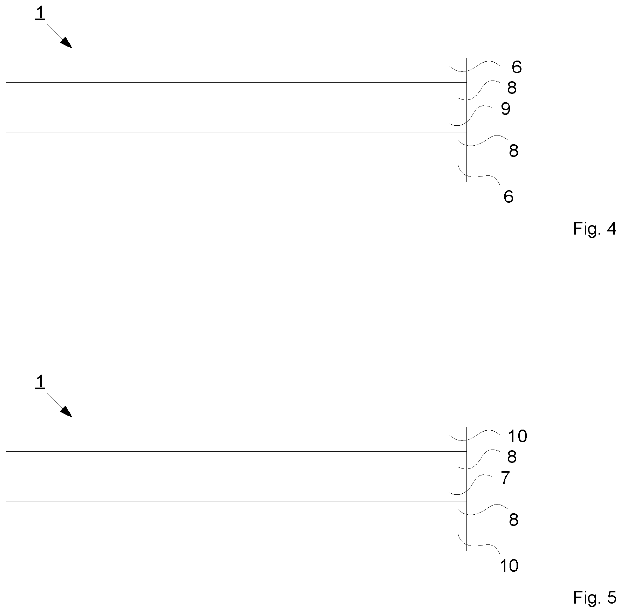

Um sowohl einen Schutz vor Wasser als auch Sauerstoff bieten zu können, ist ferner eine entsprechende Deckelfolie in Fig. 4 gezeigt. Diese umfasst ebenfalls als Deckschicht 3 und Siegelschicht 4 jeweils eine Polypropylen-Homopolymer-Schicht 6 sowie insgesamt drei Zwischenschichten 5. Die ersten beiden Zwischenschichten 5, die direkt an die Außenschichten, also an die Deckschicht 3 und die Siegelschicht 4, angrenzen, sind jeweils eine Cyclo-Olefin-Schicht 8. Zwischen den beiden Cyclo-Olefin-Schichten 8 ist letztlich eine Polyvinylalkohol-Schicht 9 angeordnet, welche aufgrund ihrer Materialeigenschaften eine hohe Sauerstoffaffinität aufweist. Somit weist die hier in Fig. 4 gezeigte Deckelfolie 1 sowohl eine hohe Wasserdampf- als auch Sauerstoffbarriere auf.

Letztlich zeigt Figur 5 eine erfindungsgemäße Deckelfolie 1, bei denen die beiden Außenschichten, also die Deckschicht 3 und die Siegelschicht 4, nukleierte Polypropylen-Homopolymer-Schichten 10 sind und diese drei Zwischenschichten 5 aufweist. Auch hier grenzen an die beiden Außenschichten jeweils eine Cyclo-Olefin-Schicht 8 an, welche wiederum eine heterophasische Random-Copolymer-Schicht 7 umschließen.

Somit ist vorstehend eine Deckelfolie und eine Bodenfolie für eine Blisterverpackung sowie eine Blisterverpackung für Medikamente gezeigt, mit denen auf Aluminium in der Folie verzichtet und kostengünstig die Anforderungen an eine hohe Wasserdampf- und Sauerstoffbarriere erfüllt werden können.

### BEZUGSZEICHENLISTE

- 1: Deckelfolie
- 2: Bodenfolie
- 3: Deckschicht
- 4: Siegelschicht
- 5: Zwischenschicht
- 6: Polypropylen-Homopolymer-Schicht
- 7: Copolymer-Schicht
- 8: Cyclo-Olefin-Schicht
- 9: Polyvinylalkohol-Schicht
- 10: Nukleierte Polypropylen-Homopolymer-Schicht

## Patentansprüche

1. Deckelfolie (1) zum Versiegeln einer Bodenfolie (2) einer Blisterverpackung für Medikamente, umfassend zwei Außenschichten, nämlich eine Deckschicht (3) und eine Siegelschicht (4), und eine oder mehrere zwischen der Deckschicht (3) und der Siegelschicht (4) angeordnete Zwischenschichten (5),
**dadurch gekennzeichnet, dass** die Deckschicht (3) und die Siegelschicht (4) Polypropylen-Schichten (6,7,10) sind.

2. Deckelfolie nach Anspruch 1, **dadurch gekennzeichnet, dass** die eine oder mehreren Zwischenschichten (5) wenigstens eine Copolymer-Schicht, vorzugsweise eine Polypropylen-Copolymer-Schicht, umfasst.

3. Deckelfolie nach Anspruch 2, **dadurch gekennzeichnet, dass** die wenigstens eine Copolymer-Schicht (7) eine Schichtdicke von 20 bis 260 µm, bevorzugt von 100 bis 180 µm, aufweist.

4. Deckelfolie nach einem der vorhergehenden Ansprüche 1 bis 3,
**dadurch gekennzeichnet, dass** die eine oder mehreren Zwischenschichten (5) wenigstens eine talkum-verstärkte Polypropylen-Schicht umfasst.

5. Deckelfolie nach wenigstens einem der vorhergehenden Ansprüche 1 bis 4, **dadurch gekennzeichnet, dass** die eine oder mehreren Zwischenschichten (5) wenigstens eine Cyclo-Olefin-Schicht (8), vorzugsweise eine Cyclo-Olefin-Copolymer-Schicht, umfasst.

6. Deckelfolie nach Anspruch 5, **dadurch gekennzeichnet, dass** die wenigstens eine Cyclo-Olefin-Schicht (8) eine Schichtdicke von 20 bis 260 µm, bevorzugt von 80 bis 100 µm, besonders bevorzugt von 80 µm aufweist.

7. Deckelfolie nach wenigstens einem der vorhergehenden Ansprüche 1 bis 6, **dadurch gekennzeichnet, dass** die eine oder mehreren Zwischenschichten wenigstens eine Polyvinylalkohol-Schicht (9), bevorzugt eine Ethylen-Vinylalkohol-Copolymer-Schicht, umfasst.

8. Deckelfolie nach Anspruch 7, **dadurch gekennzeichnet, dass** die wenigstens eine Polyvinylalkohol-Schicht (9) eine Schichtdicke von 5 bis 15 µm aufweist.

9. Deckelfolie nach wenigstens einem der vorhergehenden Ansprüche 1 bis 8, **dadurch gekennzeichnet, dass** die Deckschicht (3) und/oder die Siegelschicht (4) eine Polypropylen-Homopolymer-Schicht (6) ist.

10. Deckelfolie nach Anspruch 9, **dadurch gekennzeichnet, dass** die Polypropylen-Homopolymer-Schicht (6) eine Schichtdicke von 10 bis 140 µm, bevorzugt von 60 bis 110 µm, aufweist.

11. Deckelfolie nach wenigstens einem der vorhergehenden Ansprüche 1 bis 8, **dadurch gekennzeichnet, dass** die Deckschicht (3) und/oder die Siegelschicht (4) eine Polypropylen-Copolymer-Schicht ist.

12. Deckelfolie nach wenigstens einem der vorhergehenden Ansprüche 1 bis 8, **dadurch gekennzeichnet, dass** die Deckschicht (3) und/oder die Siegelschicht (4) eine nukleierte Polypropylen-Homopolymer-Schicht (10) ist.

13. Deckelfolie nach Anspruch 12, **dadurch gekennzeichnet, dass** die nukleierten Polypropylen-Homopolymer-Schicht (10) eine Schichtdicke von 120 bis 200 µm aufweist.

14. Deckelfolie nach wenigstens einem der vorhergehenden Ansprüche, **dadurch gekennzeichnet, dass** auf die Siegelschicht (4) ein Siegellack aufgetragen ist.

15. Deckelfolie nach wenigstens einem der vorhergehenden Ansprüche, **dadurch gekennzeichnet, dass** die Deckschicht (3) eine Barriere-Beschichtung, vorzugsweise eine abziehbare Barriere-Beschichtung, aufweist.

16. Deckelfolie nach Anspruch 15, **dadurch gekennzeichnet, dass** die Barriere-Beschichtung eine biaxial-orientierte Polypropylen-Schicht ist.

17. Bodenfolie (2) für eine Blisterverpackung für Medikamente, umfassend zwei Außenschichten, nämlich eine Deckschicht (3) und eine Siegelschicht (4), und eine oder mehrere zwischen der Deckschicht (3) und der Siegelschicht (4) angeordnete Zwischenschichten (5),
**dadurch gekennzeichnet, dass** die Deckschicht (3) und die Siegelschicht (4) Polypropylen-Schichten (6,7,10) sind.

18. Bodenfolie nach Anspruch 17, **dadurch gekennzeichnet, dass** die eine oder mehreren Zwischenschichten (5) wenigstens eine Copolymer-Schicht (7), vorzugsweise eine heterophasische Polypropylen-Copolymer-Schicht, umfasst.

19. Bodenfolie nach Anspruch 18, **dadurch gekennzeichnet, dass** die wenigstens eine Copolymer-Schicht (7) eine Schichtdicke von 20 bis 260 µm, bevorzugt von 100 bis 180 µm, aufweist.

20. Bodenfolie nach wenigstens einem der vorhergehenden Ansprüche 17 bis 19, **dadurch gekennzeichnet, dass** die eine oder mehreren Zwischenschichten (5) wenigstens eine Cyclo-Olefin-Schicht (8), vorzugsweise eine Cyclo-Olefin-Copolymer-Schicht, umfasst.

21. Bodenfolie nach Anspruch 20, **dadurch gekennzeichnet, dass** die wenigstens eine Cyclo-Olefin-Schicht (8) eine Schichtdicke von 20 bis 260 µm, bevorzugt von 80 bis 100 µm, besonders bevorzugt von 80 µm aufweist.

22. Bodenfolie nach wenigstens einem der vorhergehenden Ansprüche 17 bis 21, **dadurch gekennzeichnet, dass** die eine oder mehreren Zwischenschichten (5) wenigstens eine Polyvinylalkohol-Schicht (9), bevorzugt eine Ethylen-Vinylalkohol-Copolymer-Schicht, umfasst.

23. Bodenfolie nach Anspruch 22, **dadurch gekennzeichnet, dass** die wenigstens eine Polyvinylalkohol-Schicht (9) eine Schichtdicke von 5 bis 15 µm aufweist.

24. Bodenfolie nach wenigstens einem der vorhergehenden Ansprüche 17 bis 23, **dadurch gekennzeichnet, dass** die Deckschicht (3) und/oder die Siegelschicht (4) eine Polypropylen-Homopolymer-Schicht (6) ist.

25. Bodenfolie nach Anspruch 24, **dadurch gekennzeichnet, dass** die Polypropylen-Homopolymer-Schicht (6) eine Schichtdicke von 10 bis 140 µm, bevorzugt zwischen 60 bis 110 µm, aufweist.

26. Bodenfolie nach wenigstens einem der vorhergehenden Ansprüche 17 bis 23, **dadurch gekennzeichnet, dass** die Deckschicht (3) und/oder die Siegelschicht (4) eine heterophasische Polypropylen-Copolymer-Schicht ist.

27. Bodenfolie nach wenigstens einem der vorhergehenden Ansprüche 17 bis 23, **dadurch gekennzeichnet, dass** die Deckschicht (3) und/oder die Siegelschicht (4) eine nukleierte Polypropylen-Homopolymer-Schicht (10) ist.

28. Bodenfolie nach Anspruch 27, **dadurch gekennzeichnet, dass** die nukleierten Polypropylen-Homopolymer-Schicht (10) eine Schichtdicke von 120 bis 200 µm aufweist.

29. Blisterverpackung für Medikamente, umfassend eine Deckelfolie (1) gemäß wenigstens einem der Ansprüche 1 bis 16 und/oder eine Bodenfolie (2) gemäß wenigstens einem der Ansprüche 17 bis 28.

## Geänderte Patentansprüche

### Geänderte Patentansprüche gemäss Regel 137(2) EPÜ.

1. Deckelfolie (1) zum Versiegeln einer Bodenfolie (2) einer Blisterverpackung für Medikamente, umfassend zwei Außenschichten, nämlich eine Deckschicht (3) und eine Siegelschicht (4), und eine oder mehrere zwischen der Deckschicht (3) und der Siegelschicht (4) angeordnete Zwischenschichten (5),
**dadurch gekennzeichnet, dass** die Deckschicht (3) und die Siegelschicht (4) Polypropylen-Schichten (6,7,10) sind.

2. Deckelfolie nach Anspruch 1, **dadurch gekennzeichnet, dass** die eine oder mehreren Zwischenschichten (5) wenigstens eine Copolymer-Schicht, vorzugsweise eine Polypropylen-Copolymer-Schicht, umfasst.

3. Deckelfolie nach Anspruch 2, **dadurch gekennzeichnet, dass** die wenigstens eine Copolymer-Schicht (7) eine Schichtdicke von 20 bis 260 µm, bevorzugt von 100 bis 180 µm, aufweist.

4. Deckelfolie nach einem der vorhergehenden Ansprüche 1 bis 3,
**dadurch gekennzeichnet, dass** die eine oder mehreren Zwischenschichten (5) wenigstens eine talkum-verstärkte Polypropylen-Schicht umfasst.

5. Deckelfolie nach wenigstens einem der vorhergehenden Ansprüche 1 bis 4, **dadurch gekennzeichnet, dass** die eine oder mehreren Zwischenschichten (5) wenigstens eine Cyclo-Olefin-Schicht (8), vorzugsweise eine Cyclo-Olefin-Copolymer-Schicht, umfasst.

6. Deckelfolie nach Anspruch 5, **dadurch gekennzeichnet, dass** die wenigstens eine Cyclo-Olefin-Schicht (8) eine Schichtdicke von 20 bis 260 µm, bevorzugt von 80 bis 100 µm, besonders bevorzugt von 80 µm aufweist.

7. Deckelfolie nach wenigstens einem der vorhergehenden Ansprüche 1 bis 6, **dadurch gekennzeichnet, dass** die eine oder mehreren Zwischenschichten wenigstens eine Polyvinylalkohol-Schicht (9), bevorzugt eine Ethylen-Vinylalkohol-Copolymer-Schicht, umfasst.

8. Deckelfolie nach Anspruch 7, **dadurch gekennzeichnet, dass** die wenigstens eine Polyvinylalkohol-Schicht (9) eine Schichtdicke von 5 bis 15 µm aufweist.

9. Deckelfolie nach wenigstens einem der vorhergehenden Ansprüche 1 bis 8, **dadurch gekennzeichnet, dass** die Deckschicht (3) und/oder die Siegelschicht (4) eine Polypropylen-Homopolymer-Schicht (6) ist.

10. Deckelfolie nach Anspruch 9, **dadurch gekennzeichnet, dass** die Polypropylen-Homopolymer-Schicht (6) eine Schichtdicke von 10 bis 140 µm, bevorzugt von 60 bis 110 µm, aufweist.

11. Deckelfolie nach wenigstens einem der vorhergehenden Ansprüche 1 bis 8, **dadurch gekennzeichnet, dass** die Deckschicht (3) und/oder die Siegelschicht (4) eine Polypropylen-Copolymer-Schicht ist.

12. Deckelfolie nach wenigstens einem der vorhergehenden Ansprüche 1 bis 8, **dadurch gekennzeichnet, dass** die Deckschicht (3) und/oder die Siegelschicht (4) eine nukleierte Polypropylen-Homopolymer-Schicht (10) ist.

13. Deckelfolie nach Anspruch 12, **dadurch gekennzeichnet, dass** die nukleierten Polypropylen-Homopolymer-Schicht (10) eine Schichtdicke von 120 bis 200 µm aufweist.

14. Deckelfolie nach wenigstens einem der vorhergehenden Ansprüche, **dadurch gekennzeichnet, dass** auf die Siegelschicht (4) ein Siegellack aufgetragen ist.

15. Deckelfolie nach wenigstens einem der vorhergehenden Ansprüche, **dadurch gekennzeichnet, dass** die Deckschicht (3) eine Barriere-Beschichtung, vorzugsweise eine abziehbare Barriere-Beschichtung, aufweist.

16. Deckelfolie nach Anspruch 15, **dadurch gekennzeichnet, dass** die Barriere-Beschichtung eine biaxial-orientierte Polypropylen-Schicht ist.

17. Blisterverpackung für Medikamente, umfassend eine Deckelfolie (1) gemäß wenigstens einem der Ansprüche 1 bis 16.
